# EUROPEAN PATENT APPLICATION

(11) **EP 4 674 887 A1**
(43) Date of publication of application: **07.01.2026**
(21) Application number: 24863070.9
(22) Date of filing: 20.08.2024
(51) Int. Cl.: C08G 63/16, C08G 63/78

(54) **POLYESTER POLYMER, METHOD FOR PREPARING POLYESTER POLYMER, AND MOLDED ARTICLE**

(30) Priority: 07.09.2023 KR 20230119289; 23.07.2024 KR 20240097522
(71) Applicant: LG Chem, Ltd., Seoul 07336 (KR)
(72) Inventor: LEE, Yeonju, Daejeon 34122 (KR); CHOE, Dongcheol, Daejeon 34122 (KR); KIM, Chul Woong, Daejeon 34122 (KR); CHO, Suhyun, Daejeon 34122 (KR); KIM, Kyeongmin, Daejeon 34122 (KR); KANG, Donggyun, Daejeon 34122 (KR)
(74) Representative: Hoffmann Eitle
(86) International application number: PCT/KR2024/012314
(87) International publication number: WO 2025/053489

(57) **Abstract**

The present disclosure relates to a polyester polymer with high bio-based content and molecular weight as well as excellent optical properties, a preparation method of the polyester polymer and a molded article comprising the same.

## Description

### [TECHNICAL FIELD]

### CROSS-REFERENCE TO RELATED APPLICATION(S)

This application claims the benefit of Korean Patent Application No. 10-2023-0119289 filed on September 7, 2023 and Korean Patent Application No. 10-2024-0097522 filed on July 23, 2024 in the Korean Intellectual Property Office, the disclosures of which are incorporated herein by reference in their entirety.

The present disclosure relates to a polyester polymer, a preparation method of the polyester polymer and a molded article comprising the same.

### [BACKGROUND]

Unlike petroleum-based resins such as polystyrene resin, polyvinyl chloride resin, and polyethylene, which are used hitherto, a biodegradable polyester polymer has effects such as preventing depletion of petroleum resources and suppressing carbon dioxide emissions, and therefore can reduce environmental pollution, which is a drawback of petroleum-based plastic products. Therefore, as the problem of environmental pollution caused by waste plastics and the like have emerged as social issues, attempts are being made to expand the scope of application of the biodegradable polyester polymer to products where general plastics (petroleum-based resins) have been used, such as food packaging materials, containers, and electronic product cases.

However, existing polyester polymers have the problem that the polymer obtained after polymerization has a high yellowness or it is difficult to obtain a polymer with a high molecular weight. To solve such problems, color improvement additives such as toners or chain extenders can be used, but this may be a burden in terms of raw material costs.

Further, in recent years, there are concerns about the depletion of petroleum resources and the increase and accumulation of carbon dioxide emissions, which may lead to global warming and climate change. Therefore, there is a demand to provide a polymer made from raw materials obtained from biomass resources such as plants.

Conventional polyester polymers are prepared using petroleum-based monomers and are not polymerized using bio-based monomers, and therefore, there is a problem that the biomess content is low and carbon neutrality cannot be achieved. In addition, even if bio-based monomers are used in the synthesis of polyester polymers, there is a problem that the biosynthesis using microorganisms, which has been mainly performed hitherto, requires a lot of solvent for the separation and purification process, and thus it is neither environmentally friendly nor economical.

Therefore, research is needed on environmentally friendly polyester polymers having excellent physical properties and high molecular weight and also increasing in biomess content even without using additional additives.

### [DETAILED DESCRIPTION OF THE INVENTION]

### [Technical Problem]

It is an object of the present disclosure to provide a polyester polymer having a high biomess content and a high molecular weight as well as excellent optical properties even without using a chain extender, a preparation method of the polyester polymer and a molded article comprising the same.

### [Technical Solution]

According to an embodiment of the present disclosure, there is provided a polyester polymer comprising a repeating unit represented by the following Chemical Formula 1, wherein the polyester polymer has a biomass content of 20% or more measured according to ASTM D6866-22, and is decomposed by 20 wt.% or more based on the weight of the initial polymer when exposed to an outside environment at room temperature for 90 days or more: 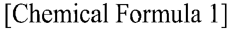 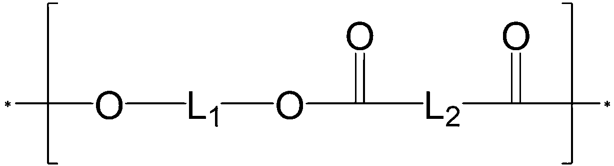 wherein in Chemical Formula 1,
L₁ is an ethylene group, and
L₂ is an alkylene group having 1 to 10 carbon atom.

According to another embodiment of the present disclosure, there is provided a preparation method of a polyester polymer, comprising the steps of: adding ethylene glycol and a dicarboxylic acid compound and reacting them at a temperature of 50°C or more and 200°C or less under a pressure of 10 torr or more and 760 torr or less to prepare an oligomer; and reacting the oligomer at a temperature of 50°C or more and 200°C or less under a pressure of 1 torr or less to prepare a polyester polymer.

According to yet another embodiment of the present disclosure, there is provided a molded article molded from a resin composition comprising the polyester polymer.

Now, a polyester polymer, a preparation method of a polyester polymer and a molded article comprising the same according to specific embodiments of the present disclosure will be described in more detail.

Unless particularly mentioned herein, the term "including" or "comprising" refers to including some element (or component) without any limitation, and should not be construed as excluding addition of other elements (or components).

The terms "first," "second," etc. are used herein to explain various elements, and these terms are only used to distinguish one constitutional element from the other constitutional elements.

Further, if the steps constituting the preparation method described herein are specified as being sequential or continuous, or unless otherwise specified, one step and other steps constituting one preparation method shall not be construed as limited to the order described herein. Therefore, the order of the steps constituting the preparation method can be changed within a range that can be easily understood by a person skilled in the art, and in this case, the accompanying changes that are obvious to a person skilled in the art are not included in the scope of the present disclosure.

Further, unless otherwise stated herein, the number average molecular weight or the weight average molecular weight can be measured using a gel permeation chromatography(GPC). Specifically, the prepolymer or copolymer is dissolved in chloroform to a concentration of 1 mg/ml, then 100 *µℓ* of the dissolved solution is injected into GPC, and GPC analysis is carried out at 40°C. At this time, chloroform is used as the mobile phase for GPC, the flow rate is 1.0 mL/min, and the column used is two Agilent Mixed-B units connected in series. RI Detector is used as a detector. The values of Mw is obtained using a calibration curve formed using a polystyrene standard sample. Twelve kinds of the polystyrene standard samples are used with the molecular weight of 160 g/mol, 580 g/mol, 1180 g/mol, 4,880 g/mol, 9,310 g/mol, 22,790 g/mol, 75,050 g/mol, 217,900 g/mol, 479,200 g/mol, 1,069,000 g/mol, 3,022,000 g/mol, and 6,545,000 g/mol.

As used herein, the copolymer refers to including a random copolymer, a block copolymer, a graft copolymer, and the like.

As used herein, the term "block" refers to a polymer including at least two repeating units linked to each other, wherein the repeating units are the same. The term "block copolymer" refers to a copolymer including at least two types of different blocks linked to each other via a direct bond or via a linking group, wherein one or more blocks are present per each block type.

As used herein, the notation 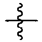 or -• means a bond linked to another substituent group.

According to an embodiment of the present disclosure, there can be provided a polyester polymer comprising a repeating unit represented by the following Chemical Formula 1, wherein the polyester polymer has a biomass content of 20% or more measured according to ASTM D6866-22, and is decomposed by 20 wt.% or more based on the weight of the initial polymer when exposed to an outside environment at room temperature for 90 days or more: 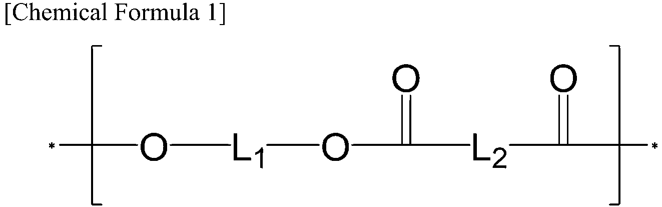 wherein in Chemical Formula 1, L₁ is an ethylene group, and L₂ is an alkylene group having 1 to 10 carbon atom.

The polyester polymer of the above embodiment may be a polyester polymer prepared by the preparation method of a polyester polymer according to other embodiments described below.

As the polyester polymer according to one embodiment is prepared by the preparation method of a polyester polymer according to the other embodiments described above, a polyester polymer having a high biomess content and a high molecular weight as well as excellent optical properties can be provided.

In the Chemical Formula 1, the L₂ may be a functional group derived from a dicarboxylic acid compound.

The L₂ may be an alkylene group having 1 to 10 carbon atoms, an alkylene group having 1 to 5 carbon atoms, or an alkylene group having 1 to 3 carbon atoms, and may be, for example, an ethylene group.

For example, the polyester polymer according to one embodiment may be polyethylene succinate.

The polyester polymer may include the repeating unit represented by Chemical Formula 1 in an amount of 90 mol % or more, 95 mol % or more, 99 mol % or more, or 99.9 mol % or more, or 90 mol % or more and 100 mol % or less, 95 mol % or more and 100 mol % or less, 99 mol % or more and 100 mol % or less, or 99.9 mol % or more and 100 mol % or less, based on the total repeating units.

For example, each repeating unit in the polyester polymer may be the repeating unit represented by Chemical Formula 1. That is, the polyester polymer may include only ethylene glycol and succinic acid as monomers, and may not include any other monomers, so that it may include only repeating units derived from ethylene glycol and succinic acid.

The polyester polymer may have a number average molecular weight (Mn) measured using a gel permeation chromatography(GPC) of 1,000 g/mol or more and 200,000 g/mol or less.

Specifically, the polyester polymer may have a number average molecular weight (Mn) measured using a gel permeation chromatography(GPC) of: 1,000 g/mol or more, 1,500 g/mol or more, 2,000 g/mol or more, 2,500 g/mol or more, 200,000 g/mol or less, 100,000 g/mol or less, 80,000 g/mol or less, or 60,000 g/mol or less, or 1,000 g/mol or more and 200,000 g/mol or less, 1,500 g/mol or more and 200,000 g/mol or less, 2,000 g/mol or more and 200,000 g/mol or less, 2,500 g/mol or more and 200,000 g/mol or less, 1,000 g/mol or more and 100,000 g/mol or less, 1,500 g/mol or more and 100,000 g/mol or less, 2,000 g/mol or more and 100,000 g/mol or less, 2,500 g/mol or more and 100,000 g/mol or less, 1,000 g/mol or more and 80,000 g/mol or less, 1,500 g/mol or more and 80,000 g/mol or less, 2,000 g/mol or more and 80,000 g/mol or less, 2,500 g/mol or more and 80,000 g/mol or less, 1,000 g/mol or more and 60,000 g/mol or less, 1,500 g/mol or more and 60,000 g/mol or less, 2,000 g/mol or more and 60,000 g/mol or less, or 2,500 g/mol or more and 60,000 g/mol or less.

As the polyester polymer according to one embodiment is prepared by the preparation method described above, it is possible to realize a high molecular weight as well as excellent optical properties even without using a chain extender.

The polyester polymer may have a weight average molecular weight(Mw) measured using a gel permeation chromatography(GPC) of 5,000 g/mol or more and 600,000 g/mol or less.

Specifically, the polyester polymer may have a weight average molecular weight(Mw) measured using a gel permeation chromatography(GPC) of: 5,000 g/mol or more, 5,500 g/mol or more, 6,000 g/mol or more, 6,500 g/mol or more, 600,000 g/mol or less, 300,000 g/mol or less, 250,000 g/mol or less, or 200,000 g/mol or less, or 5,000 g/mol or more and 600,000 g/mol or less, 5,500 g/mol or more and 600,000 g/mol or less, 6,000 g/mol or more and 600,000 g/mol or less, 6,500 g/mol or more and 600,000 g/mol or less, 5,000 g/mol or more and 300,000 g/mol or less, 5,500 g/mol or more and 300,000 g/mol or less, 6,000 g/mol or more and 300,000 g/mol or less, 6,500 g/mol or more and 300,000 g/mol or less, 5,000 g/mol or more and 250,000 g/mol or less, 5,500 g/mol or more and 250,000 g/mol or less, 6,000 g/mol or more and 250,000 g/mol or less, 6,500 g/mol or more and 250,000 g/mol or less, 5,000 g/mol or more and 200,000 g/mol or less, 5,500 g/mol or more and 200,000 g/mol or less, 6,000 g/mol or more and 200,000 g/mol or less, or 6,500 g/mol or more and 200,000 g/mol or less.

As the polyester polymer according to one embodiment is prepared by the preparation method described below, it is possible to realize a high molecular weight as well as excellent optical properties even without using a chain extender.

Meanwhile, the polyester polymer may have a biomass content measured according to ASTM D6866-22 of 20% or more.

Specifically, the polyester polymer may have a biomass content measured according to ASTM D6866-22 of: 20 % or more, 50 % or more, 90 % or more, 95 % or more, 98 % or more, 99 % or more, 100 % or less, or 99.9 % or less, or 20 % or more and 100 % or less, 50 % or more and 100 % or less, 90 % or more and 100 % or less, 95 % or more and 100 % or less, 98 % or more and 100 % or less, 99 % or more and 100 % or less, 20 % or more and 99.9 % or less, 50 % or more and 99.9 % or less, 90 % or more and 99.9 % or less, 95 % or more and 99.9 % or less, 98 % or more and 99.9 % or less, or 99 % or more and 99.9 % or less.

As the polyester polymer is prepared from a bio-derived monomer, and also is prepared according to the preparation method of a polyester polymer according to other embodiments described below, a polyester polymer having a high biomess content can be prepared.

For example, when the polyester polymer is derived from one type of bio-derived monomer, the polyester polymer can have a biomass content measured according to ASTM D6866-22 of: 20% or more and 100% or less, or 20% or more and 99.9% or less.

Alternatively, when the polyester polymer is derived from two types of bio-derived monomers, the polyester polymer may have a biomass content measured according to ASTM D6866-22 of: 90% or more, 95% or more, 98% or more, 99% or more, 100% or less, or 99.9% or less, or 90% or more and 100% or less, 95% or more and 100% or less, 98% or more and 100% or less, 99% or more and 100% or less, 90% or more and 99.9% or less, 95% or more and 99.9% or less, 98% or more and 99.9% or less, or 99% or more and 99.9% or less.

The biomass content may be a value obtained by graphitizing the polyester polymer and then calculating the content of radioactive isotope ¹⁴C according to ASTM D6866-22.

Since the polyester polymer has a biomass content of 90% or more as measured according to ASTM D6866-22, it is possible to realize the effect of achieving carbon neutrality by not containing petroleum-based monomers.

Specifically, the bio-derived monomer may mean a monomer obtained from a biomass resource such as a plant.

The polyester polymer according to one embodiment may be a biodegradable polyester polymer exhibiting biodegradability.

In this specification, a biodegradable resin or a biodegradable (co)polymer means a resin or (co)polymer that undergoes natural decomposition when exposed to the outside, and specifically, it mean a resin or (co)polymer that is decomposed by 20 wt.% or more relative to the weight of the initial resin or (co)polymer when exposed to the outside environment at room temperature (10°C to 30°C) for 90 days or more.

That is, the polyester polymer according to the embodiment can be decomposed by 20 wt.% or more based on the weight of the initial polymer when exposed to an outside environment at room temperature for 90 days or more. The method for measuring the biodegradation degree is not particularly limited, but it can be measured, for example, in accordance with ISO 14855-1.

According to another embodiment of the disclosure, there is provided a preparation method of a polyester polymer, comprising the steps of: adding ethylene glycol and a dicarboxylic acid compound and reacting them at a temperature of 50°C or more and 200°C or less under a pressure of 10 torr or more and 760 torr or less to prepare an oligomer; and reacting the oligomer at a temperature of 50°C or more and 200°C or less under a pressure of 1 torr or less to prepare a polyester polymer.

The present inventors have found that, when a polyester polymer is prepared according to the preparation method of a polyester polymer of this embodiment, a polyester polymer having a high biomess content and high molecular weight as well as excellent optical properties can be prepared even without using a chain extender, and completed the present disclosure.

In the preparation method of a polyester polymer according to one embodiment, the ethylene glycol and the dicarboxylic acid compound may be bio-derived monomers.

The bio-derived monomer may refer to a monomer obtained from a biomass resource such as a plant.

Specifically, according to the preparation method of a polyester polymer, the equivalence ratio between monomers can be finely adjusted by using a bio-based monomer, thereby preparing a polyester polymer having a high biomess content and high molecular weight as well as excellent optical properties even without using a chain extender.

Specifically, the preparation method of a polyester polymer according to one embodiment may comprise a step of adding ethylene glycol and a dicarboxylic acid compound and reacting them at a temperature of 50°C or more and 200°C or less under a pressure of 10 torr or more and 760 torr or less to prepare an oligomer; and a step of reacting the oligomer at a temperature of 50°C or more and 200°C or less under a pressure of 1 torr or less to prepare a polyester polymer.

In the preparation method of a polyester polymer according to this embodiment, as both the oligomer preparing step and the polymerizing step are carried out at 200°C or less, side reactions between monomers can be adjusted to prevent a yellowing phenomenon, and also the equivalence ratio between monomers can be finely adjusted by using bio-based monomers, whereby a polyester polymer having a high biomess content and high molecular weight as well as excellent optical properties can be prepared even without using a chain extender.

The step of preparing the oligomer can be specifically performed at a temperature of 50°C or more and 200°C or less, 70°C or more and 200°C or less, or 90°C or more and 200°C or less.

Also, the step of preparing the oligomer can be carried out under a pressure of 10 torr or more and 760 torr or less, 30 torr or more and 760 torr or less, 50 torr or more and 760 torr or less, 50 torr or more and 700 torr or less, 50 torr or more and 500 torr or less, or 50 torr or more and 400 torr or less.

In addition, the step of preparing the oligomer can be carried out for a time of 1 hour or more and 30 hours or less, 1 hour or more and 20 hours or less, 1 hour or more and 10 hours or less, 2 hours or more and 10 hours or less, 2 hours or more and 8 hours or less, or 2 hours or more and 6 hours or less.

That is, the step of adding ethylene glycol and a dicarboxylic acid compound and reacting them at a temperature of 50°C or more and 200°C or less under a pressure of 10 torr or more and 760 torr or less to prepare an oligomer may comprise a step of adding ethylene glycol and a dicarboxylic acid compound and reacting them at a temperature of 90°C or more and 200°C or less under a pressure of 50 torr or more and 700 torr or less for 1 hour or more and 30 hours or less to prepare an oligomer.

As the step of preparing the oligomer is carried out under the above conditions, side reactions between monomers can be controlled to prevent a yellowing phenomenon, and also the equivalence ratio between monomers can be finely adjusted by using bio-based monomers, whereby a polyester polymer having a high biomess content and high molecular weight as well as excellent optical properties can be prepared even without using a chain extender.

Further, the step of reacting the oligomer at a temperature of 50°C or more and 200°C or less under a pressure of 1 torr or less to prepare a polyester polymer may be carried out, specifically, at a temperature of 50°C or more and 200°C or less, 70°C or more and 200°C or less, or 90°C or more and 200°C or less.

Further, the step of reacting the oligomer at a temperature of 50°C or more and 200°C or less under a pressure of 1 torr or less to prepare a polyester polymer may be carried out under a pressure of 1 torr or less, 0.1 torr or more and 1 torr or less, 0.1 torr or more and 0.5 torr or less, or 0.1 torr or more and 0.2 torr or less.

Further, the step of reacting the oligomer at a temperature of 50°C or more and 200°C or less under a pressure of 1 torr or less to prepare a polyester polymer may be carried out for a time of 1 hour or more and 30 hours or less, 1 hour or more and 20 hours or less, 10 hours or more and 30 hours or less, 10 hours or more and 20 hours or less, 12 hours or more and 20 hours or less, 15 hours or more and 20 hours or less, or 15 hours or more and 18 hours or less.

That is, the step of reacting the oligomer at a temperature of 50°C or more and 200°C or less under a pressure of 1 torr or less to prepare a polyester polymer may comprise a step of reacting the oligomer at a temperature of 50°C or more and 200°C or less under a pressure of 1 torr or less for 10 hour or more and 30 hours or less to prepare a polyester polymer.

As the step of reacting the oligomer at a temperature of 50°C or more and 200°C or less under a pressure of 1 torr or less to prepare a polyester polymer is carried out under the above conditions, side reactions between monomers can be controlled to prevent a yellowing phenomenon, and also the equivalence ratio between monomers can be finely adjusted by using bio-based monomers, whereby a polyester polymer having a high biomess content and high molecular weight as well as excellent optical properties can be prepared even without using a chain extender.

In particular, when the step of reacting the oligomer at a temperature of 50°C or more and 200°C or less under a pressure of 1 torr or less to prepare a polyester polymer is carried out at a temperature exceeding 200°C, a side reaction may proceed to cause a browning phenomenon of the polyester polymer, which may cause a technical problem of excessively increasing the yellowness.

The polyester polymer prepared by the preparation method of the polyester polymer according to one embodiment may be a biodegradable polyester polymer exhibiting biodegradability.

In this specification, a biodegradable resin or a biodegradable (co)polymer means a resin or (co)polymer that undergoes natural decomposition when exposed to the outside, and specifically, it may mean a resin or (co)polymer that decomposes by 20 wt.% or more relative to the weight of the initial resin or (co)polymer when exposed to the outside environment at room temperature (10°C to 30°C) for 90 days or more.

That is, the polyester polymer prepared by the preparation method of the polyester polymer according to one embodiment can be decomposed by 20 wt.% or more based on the weight of the initial resin or (co)polymer when exposed to an outside environment at room temperature for 90 days or more. The method for measuring the biodegradation degree is not particularly limited, but it can be measured, for example, in accordance with ISO 14855-1.

Meanwhile, in the preparation method of a polyester polymer according to one embodiment, the chain extender may be included in an amount of less than 0.0001 parts by weight based on total 100 parts by weight of the ethylene glycol and the dicarboxylic acid compound.

Specifically, in the preparation method of a polyester polymer according to one embodiment, the chain extender may be included in an amount of less than 0.0001 part by weight, less than 0.000001 part by weight, less than 0.00001 part by weight, or 0 part by weight based on total 100 parts by weight of the ethylene glycol and the dicarboxylic acid compound.

That is, the preparation method of a polyester polymer according to one embodiment may not include a chain extender.

As the preparation method of a polyester polymer according to one embodiment comprises a step of adding ethylene glycol and a dicarboxylic acid compound and reacting them at a temperature of 50°C or more and 200°C or less under a pressure of 10 torr or more and 760 torr or less to prepare an oligomer; and a step of reacting the oligomer at a temperature of 50°C or more and 200°C or less under a pressure of 1 torr or less to prepare a polyester polymer as described above, the equivalence ratio between monomers can be finely adjusted by using bio-based monomers, whereby a polyester polymer having a high biomess content and high molecular weight as well as excellent optical properties can be prepared even without using a chain extender.

The polyester polymer may have a number average molecular weight (Mn) measured using a gel permeation chromatography(GPC) of 1,000 g/mol or more and 200,000 g/mol or less.

Specifically, the polyester polymer may have a number average molecular weight(Mn) measured using a gel permeation chromatography(GPC) of: 1,000 g/mol or more, 1,500 g/mol or more, 2,000 g/mol or more, 2,500 g/mol or more, 200,000 g/mol or less, 100,000 g/mol or less, 80,000 g/mol or less, or 60,000 g/mol or less, or 1,000 g/mol or more and 200,000 g/mol or less, 1,500 g/mol or more and 200,000 g/mol or less, 2,000 g/mol or more and 200,000 g/mol or less, 2,500 g/mol or more and 200,000 g/mol or less, 1,000 g/mol or more and 100,000 g/mol or less, 1,500 g/mol or more and 100,000 g/mol or less, 2,000 g/mol or more and 100,000 g/mol or less, 2,500 g/mol or more and 100,000 g/mol or less, 1,000 g/mol or more and 80,000 g/mol or less, 1,500 g/mol or more and 80,000 g/mol or less, 2,000 g/mol or more and 80,000 g/mol or less, 2,500 g/mol or more and 80,000 g/mol or less, 1,000 g/mol or more and 60,000 g/mol or less, 1,500 g/mol or more and 60,000 g/mol or less, 2,000 g/mol or more and 60,000 g/mol or less, or 2,500 g/mol or more and 60,000 g/mol or less.

As the preparation method of a polyester polymer according to one embodiment comprises a step of adding ethylene glycol and a dicarboxylic acid compound and reacting them at a temperature of 50°C or more and 200°C or less under a pressure of 10 torr or more and 760 torr or less to prepare an oligomer; and a step of reacting the oligomer at a temperature of 50°C or more and 200°C or less under a pressure of 1 torr or less to prepare a polyester polymer as described above, the equivalence ratio between monomers can be finely adjusted by using bio-based monomers, whereby a polyester polymer having a high molecular weight as well as excellent optical properties can be prepared even without using a chain extender.

The polyester polymer may have a weight average molecular weight (Mw) measured using a gel permeation chromatography(GPC) of 5,000 g/mol or more and 600,000 g/mol or less.

Specifically, the polyester polymer may have a weight average molecular weight(Mw) measured using a gel permeation chromatography(GPC) of: 5,000 g/mol or more, 5,500 g/mol or more, 6,000 g/mol or more, 6,500 g/mol or more, 600,000 g/mol or less, 300,000 g/mol or less, 250,000 g/mol or less, or 200,000 g/mol or less, or 5,000 g/mol or more and 600,000 g/mol or less, 5,500 g/mol or more and 600,000 g/mol or less, 6,000 g/mol or more and 600,000 g/mol or less, 6,500 g/mol or more and 600,000 g/mol or less, 5,000 g/mol or more and 300,000 g/mol or less, 5,500 g/mol or more and 300,000 g/mol or less, 6,000 g/mol or more and 300,000 g/mol or less, 6,500 g/mol or more and 300,000 g/mol or less, 5,000 g/mol or more and 250,000 g/mol or less, 5,500 g/mol or more and 250,000 g/mol or less, 6,000 g/mol or more and 250,000 g/mol or less, 6,500 g/mol or more and 250,000 g/mol or less, 5,000 g/mol or more and 200,000 g/mol or less, 5,500 g/mol or more and 200,000 g/mol or less, 6,000 g/mol or more and 200,000 g/mol or less, or 6,500 g/mol or more and 200,000 g/mol or less.

As the preparation method of a polyester polymer according to one embodiment comprises a step of adding ethylene glycol and a dicarboxylic acid compound and reacting them at a temperature of 50°C or more and 200°C or less under a pressure of 10 torr or more and 760 torr or less to prepare an oligomer; and a step of reacting the oligomer at a temperature of 50°C or more and 200°C or less under a pressure of 1 torr or less to prepare a polyester polymer as described above, the equivalence ratio between monomers can be finely adjusted by using bio-based monomers, whereby a polyester polymer having a high molecular weight as well as excellent optical properties can be prepared even without using a chain extender.

In the preparation method of a polyester polymer according to one embodiment, when the ethylene glycol and the dicarboxylic acid compound are added, the ethylene glycol and the dicarboxylic acid compound may be added in an appropriate ratio. For example, the ethylene glycol may be included in an amount of 1.01 mol or more and 1.5 mol or less based on 1 mol of the dicarboxylic acid compound.

Specifically, the ethylene glycol may be included in an amount of 1.01 mol or more, 1.5 mol or less, 1.4 mol or less, 1.3 mol or less, 1.25 mol or less, 1.2 mol or less, or 1.1 mol or less, or 1.01 mol or more and 1.5 mol or less, 1.01 mol or more and 1.4 mol or less, 1.01 mol or more and 1.3 mol or less, 1.01 mol or more and 1.25 mol or less, 1.01 mol or more and 1.2 mol or less, or 1.01 mol or more and 1.1 mol or less based on 1 mol of the dicarboxylic acid compound.

As the dicarboxylic acid compound and the ethylene glycol are added in the above ratio, a polyester polymer can be prepared with excellent economic efficiency without further added by-products.

Meanwhile, the polyester polymer may include a repeating unit represented by the following Chemical Formula 1. 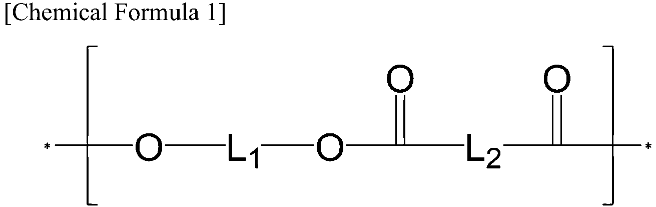 wherein in Chemical Formula 1, L₁ is an ethylene group, and L₂ is an alkylene group having 1 to 10 carbon atom.

The L₁ may be a functional group derived from ethylene glycol, and the L₂ may be a functional group derived from a dicarboxylic acid compound.

The L₂ may be an alkylene group having 1 to 10 carbon atoms, an alkylene group having 1 to 5 carbon atoms, or an alkylene group having 1 to 3 carbon atoms, and may be, for example, an ethylene group.

The polyester polymer prepared by the preparation method of a polyester polymer according to one embodiment may be polyethylene succinate.

The polyester polymer may include the repeating unit represented by Chemical Formula 1 in an amount of 90 mol % or more, 95 mol % or more, 99 mol % or more, or 99.9 mol % or more, or 90 mol % or more and 100 mol % or less, 95 mol % or more and 100 mol % or less, 99 mol % or more and 100 mol % or less, or 99.9 mol % or more and 100 mol % or less based on the total repeating units.

For example, each repeating unit in the polyester polymer may be the repeating unit represented by Chemical Formula 1. That is, the polyester polymer may include only ethylene glycol and succinic acid as monomers, and may not contain any other monomers, so that it may include only repeating units derived from ethylene glycol and succinic acid.

Meanwhile, the polyester polymer may have a biomass content measured according to ASTM D6866-22 of 20% or more.

Specifically, the polyester polymer may have a biomass content measured according to ASTM D6866-22 of: 20% or more, 50% or more, 90% or more, 95% or more, 98% or more, 99% or more, 100% or less, or 99.9% or less, or 20% or more and 100% or less, 50% or more and 100% or less, 90% or more and 100% or less, 95% or more and 100% or less, 98% or more and 100% or less, 99% or more and 100% or less, 20% or more and 99.9% or less, 50% or more and 99.9% or less, 90% or more and 99.9% or less, 95% or more and 99.9% or less, 98% or more and 99.9% or less, or 99% or more and 99.9% or less.

The polyester polymer is prepared from a bio-derived monomer and also is prepared according to the preparation method of a polyester polymer of another embodiment described below, so that a polyester polymer having a high biomess content can be prepared.

For example, when the polyester polymer is derived from one type of bio-derived monomer, the polyester polymer may have a biomass content measured according to ASTM D6866-22 of 20% or more and 100% or less, or 20% or more and 99.9% or less.

Alternatively, when the polyester polymer is derived from two types of bio-derived monomers, the polyester polymer may have a biomass content measured according to ASTM D6866-22 of: 90% or more, 95% or more, 98% or more, 99% or more, 100% or less, or 99.9% or less, or 90% or more and 100% or less, 95% or more and 100% or less, 98% or more and 100% or less, 99% or more and 100% or less, 90% or more and 99.9% or less, 95% or more and 99.9% or less, 98% or more and 99.9% or less, or 99% or more and 99.9% or less.

As the preparation method of a polyester polymer according to one embodiment comprises a step of adding ethylene glycol and a dicarboxylic acid compound and reacting them at a temperature of 50°C or more and 200°C or less under a pressure of 10 torr or more and 760 torr or less to prepare an oligomer; and a step of reacting the oligomer at a temperature of 50°C or more and 200°C or less under a pressure of 1 torr or less to prepare a polyester polymer as described above, the equivalence ratio between monomers can be finely adjusted by using bio-based monomers, thereby preparing a polyester polymer having a high molecular weight as well as excellent optical properties.

The biomass content may be a value obtained by graphitizing the polyester polymer and then calculating the content of radioactive isotope ¹⁴C according to ASTM D6866-22.

Since the polyester polymer has a biomass content of 90% or more as measured according to ASTM D6866-22, it is possible to realize the effect of achieving carbon neutrality by not containing petroleum-based monomers.

The polyester polymer according to one embodiment may be a biodegradable polyester polymer exhibiting biodegradability.

In this specification, a biodegradable resin or a biodegradable (co)polymer means a resin or (co)polymer that undergoes natural decomposition when exposed to the outside, and specifically, it mean a resin or (co)polymer that is decomposed by 20 wt.% or more relative to the weight of the initial resin or (co)polymer when exposed to the outside environment at room temperature (10°C to 30°C) for 90 days or more.

According to one embodiment of the disclosure, there can be provided a molded article molded from a resin composition comprising the polyester polymer. The resin composition including the polyester polymer may further include other additives in addition to the polyester polymer to improve physical properties.

The molded article may comprise one or more molded articles selected from the group consisting of injection molded articles, extrusion molded articles, inflation molded articles, fibers, nonwoven fabrics, foams, adhesives, films, and sheets.

The use of the molded article is not particularly limited, but for example, the molded article may be an electronic material, a building material, a food packaging, a food container (disposable cup, tray, etc.), an industrial article, an agricultural article (e.g., mulching film), a nonwoven fabric, a fiber, etc.

Specifically, a film comprising the polyester polymer may be provided.

The film comprising the polyester polymer may have a yellowness of 50 or less.

Specifically, the film comprising the polyester polymer may have a yellowness of: 1 or more, 10 or more, 15 or more, 50 or less, or 48 or less, or 1 or more and 50 or less, 10 or more and 50 or less, 15 or more and 50 or less, 1 or more and 48 or less, 10 or more and 48 or less, or 15 or more and 48 or less.

The polyester polymer according to one embodiment is prepared by the preparation method described above, and specifically, it is prepared by the preparation method comprising a step of adding ethylene glycol and a dicarboxylic acid compound and reacting them at a temperature of 50°C or more and 200°C or less under a pressure of 10 torr or more and 760 torr or less to prepare an oligomer; and a step of reacting the oligomer at a temperature of 50°C or more and 200°C or less under a pressure of 1 torr or less to prepare a polyester polymer, so that the equivalence ratio between monomers can be finely adjusted by using bio-based monomers, thereby preparing a polyester polymer having excellent optical properties.

The method for measuring the yellowness is not particularly limited, but for example, it may be a value measured for a film having a thickness of 180 *µ*m including the polyester polymer using a Nippon Denshok under conditions of a light source D65 and a viewing angle of 10 degrees.

### [Advantageous Effects]

According to the present disclosure, a preparation method of a polyester polymer having a high biomess content and high molecular weight as well as excellent optical properties even without using a chain extender, and a polyester polymer prepared thereby can be provided.

### [DETAILED DESCRIPTION OF THE EMBODIMENTS]

Hereinafter, embodiments of the present disclosure will be described in more detail with reference to the following Examples. However, the following Examples are for illustrative purposes only, and are not intended to limit the scope of the present disclosure.

### Example 1

20 g (0.322 mol) of bio-derived ethylene glycol, 37.3 g (0.316 mol) of bio-derived succinic acid, and 0.2 g (1.05 mmol) of p-toluenesulfonic acid were added to an oil bath reactor and mixed. The mixture was then subjected to a polymerization reaction at 90°C and 50 torr for 2 hours to prepare an oligomer.

Subsequently, the oligomer was further reacted at 90°C and 0.2 torr for 18 hours to prepare a polyester polymer.

### Example 2

A polyester polymer was prepared in the same manner as in Example 1, except that a polymerization reaction was carried out at 110°C and 50 Torr for 2 hours to prepare an oligomer, and then the oligomer was further reacted at 110°C and 0.2 Torr for 18 hours.

### Example 3

A polyester polymer was prepared in the same manner as in Example 1, except that a polymerization reaction was carried out at 130°C and 50 Torr for 2 hours to prepare an oligomer, and then the oligomer was further reacted at 130°C and 0.2 Torr for 18 hours.

### Example 4

A polyester polymer was prepared in the same manner as in Example 1, except that a polymerization reaction was carried out at 150°C and 50 Torr for 2 hours to prepare an oligomer, and then the oligomer was further reacted at 150°C and 0.2 Torr for 18 hours.

### Example 5

A polyester polymer was prepared in the same manner as in Example 1, except that a polymerization reaction was carried out at 170°C and 50 Torr for 2 hours to prepare an oligomer, and then the oligomer was further reacted at 170°C and 0.2 Torr for 18 hours.

### Example 6

A polyester polymer was prepared in the same manner as in Example 1, except that a polymerization reaction was carried out at 190°C and 50 Torr for 2 hours to prepare an oligomer, and then the oligomer was further reacted at 190°C and 0.2 Torr for 18 hours.

### Example 7

A polyester polymer was prepared in the same manner as in Example 1, except that 0.438 g (1.288 mmol) of titanium butoxide(Ti(buO)₄) was added instead of p-toluenesulfonic acid, a polymerization reaction was carried out at 150°C and 400 torr for 2 hours, the temperature was then increased to 180°C, a polymerization reaction was carried out at 400 torr for 2 hours, and at 180°C and 10 torr for 2 hours to prepare an oligomer, and then the oligomer was further reacted at 180°C and 0.2 torr for 18 hours.

### Example 8

A polyester polymer was prepared in the same manner as in Example 1, except that 0.438 g (1.288 mmol) of titanium butoxide(Ti(buO)₄) was added instead of p-toluenesulfonic acid, a polymerization reaction was carried out at 150°C and 400 torr for 2 hours, the temperature was then increased to 190°C, a polymerization reaction was carried out at 400 torr for 2 hours, and at 190°C and 10 torr for 2 hours to prepare an oligomer, and then the oligomer was further reacted at 190°C and 0.2 torr for 18 hours.

### Example 9

A polyester polymer was prepared in the same manner as in Example 1, except that 0.438 g (1.288 mmol) of titanium butoxide(Ti(buO)₄) was added instead of p-toluenesulfonic acid, a polymerization reaction was carried out at 150°C and 400 torr for 2 hours, the temperature was then increased to 200°C, a polymerization reaction was carried out at 400 torr for 2 hours, and at 200°C and 10 torr for 2 hours to prepare an oligomer, and then the oligomer was further reacted at 200°C and 0.2 torr for 18 hours.

### Comparative Example 1

17.36 g (0.279 mol) of non-bio derived ethylene glycol, 23.6 g (0.199 mol) of non-bio derived succinic acid, and 0.162 g (0.867 mmol) of SnCl₂ were added to an oil bath reactor and mixed. Then, the mixture was subjected to a polymerization reaction at 120°C and 400 torr for 3 hours to prepare an oligomer.

Subsequently, the oligomer was reacted at 170°C and 10 torr for 10 hours, heated to 230°C and further reacted at 0.2 torr for 1 hours to prepare a polyester polymer.

### Comparative Example 2

A polyester polymer was prepared in the same manner as in Example 1, except that the oligomer was further reacted at 220°C and 0.2 torr for 18 hours while using a non-bio derived monomer.

### Comparative Example 3

(20 g (0.322 mol) of bio-derived ethylene glycol, 0.316 mol of dimethyl terephthalate, and 0.438 g (1.288 mmol) of titanium butoxide (Ti(buO)₄) were added to an oil bath reactor and mixed. A polymerization reaction was then carried out at 50 torr for 2 hours while increasing the temperature to 240 to prepare an oligomer.

Subsequently, the oligomer was further reacted at 0.2 torr for 18 hours while increasing the temperature to 290°C to prepare a polyester polymer.

### <Experimental Example>

The characteristics of the copolymers prepared in Examples and Comparative Examples were evaluated as follows.

### 1) Evaluation of molecular weight by GPC (gel permeation chromatography)

For each step copolymer prepared in Examples and Comparative Examples, the molecular weight was evaluated using Water e2695 model device and Agilent Plgel mixed c and b column. The sample was prepared at 1 mg/ml and chloroform was prepared as a solvent, and 100 ul was injected. Twelve kinds of the polystyrene standard samples were used with the molecular weight of 160 g/mol, 580 g/mol, 1180 g/mol, 4,880 g/mol, 9,310 g/mol, 22,790 g/mol, 75,050 g/mol, 217,900 g/mol, 479,200 g/mol, 1,069,000 g/mol, 3,022,000 g/mol, and 6,545,000 g/mol. The weight average molecular weight, number average molecular weight, and polydispersity index were measured by a gel permeation chromatography (GPC, Tosoh ECO SEC Elite), and the results are shown in Table 1 below.
Solvent: chloroform (eluent)
Flow rate: 1.0 ml/min
Column temperature: 40°C
Standard: Polystyrene (corrected by cubic function)

**[Table 1]**

| Category | Molecular weight characterization | | |
|---|---|---|---|
| | Mn (g/mol) | Mw (g/mol) | PDI |
| Example 1 | 2621 | 6051 | 2.31 |
| Example 2 | 3201 | 8824 | 2.76 |
| Example 3 | 4325 | 9900 | 2.29 |
| Example 4 | 10224 | 16548 | 1.61 |
| Example 5 | 21209 | 36988 | 1.74 |
| Example 6 | 22025 | 40091 | 1.82 |
| Example 7 | 42868 | 114271 | 2.67 |
| Example 8 | 45709 | 114861 | 2.51 |
| Example 9 | 47273 | 111047 | 2.35 |
| Comparative Example 1 | 9657 | 18057 | 1.87 |
| Comparative Example 2 | 12030 | 27068 | 2.25 |

### 2) Biomess content

For the polyester polymers prepared in Examples and Comparative Examples, the samples were graphitized, and then the content of radioactive isotope ¹⁴C was analyzed and calculated according to ASTM D6866-22.

### 3) Yellowness

The polyester polymer pellets prepared in Examples and Comparative Examples were melted at 130°C for 3 minutes in a hot press and formed into a film (thickness: 180 µm).

The yellowness of the polyester polymer film (thickness: 180 µm) was measured using Nippon Denshoku under the conditions of light source D65 and a viewing angle of 10 degrees.

### 4) Biodegradation degree

The polyester polymer pellets prepared in Examples 3, 4 and 9 and Comparative Examples 1 and 3 were cut into pieces with a diameter of 5 mm or less to make samples, which were placed in a sample holder of a freezer/mill, and then a stainless steel rod was inserted. The chamber was filled with liquid nitrogen, and then the samples were crushed 60 times per minute for 10 minutes. The freeze-crushed powder was sieved through a 250 *µ*m sieve to prepare a sample for measuring the biodegradation degree.

The sample for measuring the biodegradation degree was used to measure the biodegradation degree at a temperature of 28°C by the analysis method of ISO 14855-1. At this time, the amount of CO₂ generated was measured using an NDIR sensor, and a microbial respirometer was used.

**[Table 2]**

| | Biomess content (%) | Yellowness | Biodegradation degree |
|---|---|---|---|
| Example 1 | 99 | 15 | - |
| Example 2 | 99 | 17 | - |
| Example 3 | 99 | 32 | 100 % (120 days) |
| Example 4 | 99 | 44 | 100 % (148 days) |
| Example 5 | 99 | 48 | - |
| Example 6 | 99 | 45 | - |
| Example 7 | 99 | 17 | - |
| Example 8 | 99 | 20 | - |
| Example 9 | 99 | 20 | 100 % (223 days) |
| Comparative Example 1 | 0 | 72 | 100 % (148 days) |
| Comparative Example 2 | 0 | 75 | - |
| Comparative Example 3 | 0 | 21 | 0 % |

According to Table 2, it can be confirmed that the polyester polymers of Examples have a biomess content of 99% and achieve carbon neutrality by using a bio-derived monomer, and also have the characteristics of high biomess content and molecular weight as well as low yellowness even without using a chain extender. On the other hand, it can be confirmed that the polyester polymers of Comparative Examples have a biomess content of 0% and do not achieve carbon neutrality, and also exhibits poor optical properties compared to Examples.

## Claims

1. A polyester polymer comprising a repeating unit represented by the following Chemical Formula 1,
wherein the polyester polymer has a biomass content of at least 20% as measured according to ASTM D6866-22, and
is decomposed by at least 20 wt.% based on a weight of an initial polymer when exposed to an outside environment at room temperature for at least 90 days: 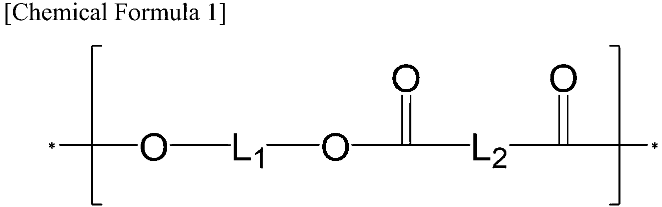
wherein in Chemical Formula 1,
L₁ is an ethylene group, and
L₂ is an alkylene group having 1 to 10 carbon atom.

2. The polyester polymer of claim 1, wherein:
the polyester polymer has a number average molecular weight of 1,000 g/mol or more and 200,000 g/mol or less.

3. The polyester polymer of claim 1, wherein:
the polyester polymer has a weight average molecular weight of 5,000 g/mol or more and 600,000 g/mol or less.

4. The polyester polymer of claim 1, wherein:
the polyester polymer comprises the repeating unit represented by Chemical Formula 1 in an amount of 90 mol % or more based on the total repeating unit.

5. The polyester polymer of claim 1, wherein:
each repeating unit in the polyester polymer is the repeating unit represented by Chemical Formula 1.

6. A preparation method of a polyester polymer, comprising the steps of:
adding ethylene glycol and a dicarboxylic acid compound and reacting them at a temperature of 50°C or more and 200°C or less under a pressure of 10 torr or more and 760 torr or less to prepare an oligomer; and
reacting the oligomer at a temperature of 50°C or more and 200°C or less under a pressure of 1 torr or less to prepare the polyester polymer.

7. The preparation method of a polyester polymer of claim 6, wherein:
the polyester polymer is decomposed by at least 20 wt.% based on a weight of an initial polymer when exposed to an outside environment at room temperature for at least 90 days.

8. The preparation method of a polyester polymer of claim 6, wherein:
the addition of the ethylene glycol and the dicarboxylic acid compound and the reaction thereof are carried out at a temperature of 90°C or more and 200°C or less under a pressure of 50 torr or more and 700 torr or less for 1 hour or more and 30 hours or less to prepare the oligomer.

9. The preparation method of a polyester polymer of claim 6, wherein:
the reaction of the oligomer is carried out at a temperature of 50°C or more and 200°C or less under a pressure of 1 torr or less for 1 hour or more and 30 hours or less to prepare the polyester polymer.

10. The preparation method of a polyester polymer of claim 6, wherein:
a chain extender is included in an amount of less than 0.0001 parts by weight based on total 100 parts by weight of the ethylene glycol and the dicarboxylic acid compound.

11. The preparation method of a polyester polymer of claim 6, wherein:
the polyester polymer has a number average molecular weight of 1,000 g/mol or more and 200,000 g/mol or less.

12. The preparation method of a polyester polymer of claim 6, wherein:
the polyester polymer has a weight average molecular weight of 5,000 g/mol or more and 600,000 g/mol or less.

13. The preparation method of a polyester polymer of claim 6, wherein:
the ethylene glycol is included in an amount of 1.01 mol or more and 1.5 mol or less based on 1 mol of the dicarboxylic acid compound.

14. The preparation method of a polyester polymer of claim 6, wherein:
the polyester polymer comprises a repeating unit represented by the following Chemical Formula 1: 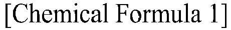 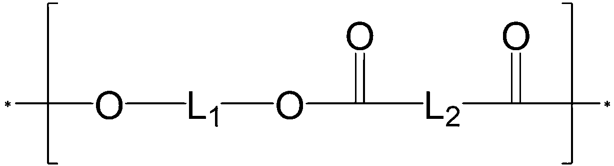
wherein in Chemical Formula 1,
L₁ is an ethylene group, and
L₂ is an alkylene group having 1 to 10 carbon atom.

15. The preparation method of a polyester polymer of claim 14, wherein:
the polyester polymer comprises the repeating unit represented by Chemical Formula 1 in an amount of 90 mol % or more based on the total repeating units.

16. The preparation method of a polyester polymer of claim 14, wherein:
each repeating unit in the polyester polymer is the repeating unit represented by Chemical Formula 1.

17. The preparation method of a polyester polymer of claim 6, wherein:
the polyester polymer has a biomass content of at least 90% as measured according to ASTM D6866-22.

18. A molded article molded from a resin composition comprising the polyester polymer of claim 1.

19. The molded article of claim 18, wherein:
the molded article comprises one or more molded articles selected from the group consisting of injection molded articles, extrusion molded articles, inflation molded articles, fibers, nonwoven fabrics, foams, adhesives, films, and sheets.
